Europäisches Patentamt

European Patent Office

Office européen des brevets

(19)

(11) Numéro de publication: **0 267 078**
**B1**

(12) **FASCICULE DE BREVET EUROPEEN**

(45) Date de publication du fascicule du brevet:
**04.04.90**

(51) Int. Cl.⁴: **F02K 1/72**

(21) Numéro de dépôt: **87402221.3**

(22) Date de dépôt: **07.10.87**

(54) **Ensemble de palier de rampe de détection de position pour un inverseur de poussée de turbosoufflante.**

(30) Priorité: **08.10.86 FR 8613991**

(43) Date de publication de la demande:
**11.05.88 Bulletin 88/19**

(45) Mention de la délivrance du brevet:
**04.04.90 Bulletin 90/14**

(84) Etats contractants désignés:
**DE FR GB**

(56) Documents cités:
**EP-A- 0 109 219**
**FR-A- 2 405 366**
**US-A- 3 500 644**
**US-A- 4 005 822**
**US-A- 4 177 639**

(73) Titulaire: **SOCIETE NATIONALE D'ETUDE ET DE CONSTRUCTION DE MOTEURS D'AVIATION, "S.N.E.C.M.A.", 2, boulevard du Général Martial Valin, F-75015 Paris(FR)**

(72) Inventeur: **Leclercq, Guy Etienne Olivier, 29, rue de la Forêt La Rochette, F-77000 Melun(FR)**

(74) Mandataire: **Moinat, François et al, S.N.E.C.M.A. Service des Brevets Boîte Postale 81, F-91003 Evry Cédex(FR)**

ACTORUM AG

## Description

La présente invention concerne un ensemble de palier supportant une rampe de détection de position adaptée à un inverseur de poussée de turbosoufflante.

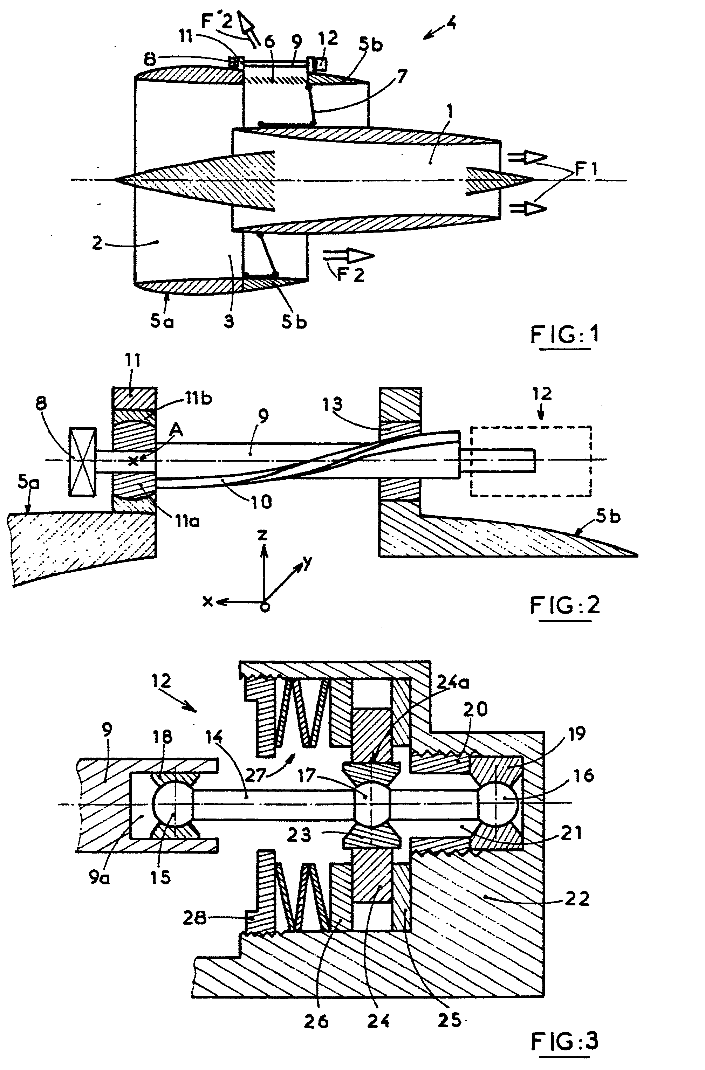

La figure 1 du dessin joint représente un moteur pour utilisation aéronautique d'un type connu de turbosoufflante. Sur ce moteur un turboréacteur central 1 délivre un poussée au moyen du jet obtenu par un flux primaire F1. A l'avant du moteur, le flux d'entrée passe par une soufflante 2 et à sa sortie, une partie du flux entre dans un canal secondaire 3 annulaire entourant le turboréacteur 1 à l'avant pour constituer un flux secondaire $F_2$ dont le jet procure une poussée additionnelle. Le canal secondaire 3 est équipé d'un inverseur de poussée 4. La demi-vue supérieure de la figure 1 représente une configuration de vol de l'inverseur de poussée 4 en position déployée dans laquelle le flux secondaire $F_2$ est dévié en $F'_2$. L'enveloppe de canal secondaire comporte une partie avant fixe $5^a$ et une partie arrière formant un capot mobile 5 b susceptible de se translater axialement par tout moyen de commande connu et non représenté au dessin du genre vérin. Dans la position déployée, le capot mobile 5 b translaté provoque le déplacement d'obstacles 7 qui obturent le canal secondaire et découvre une grille 6 qui oriente le flux $F'_2$. Dans la position jet direct de l'inverseur de poussée représentée sur la demi-vue inférieure de la figure 1, les obstacles 7 sont escamotés dans la paroi du canal et la grille 6 est recouverte par le capot mobile 5 b.

En vue d'assurer toutes les sécurités du vol et en particulier d'obtenir la synchronisation de diverses commandes, l'inverseur de poussée dont le principe de construction et de fonctionnement a été brièvement décrit ci-dessus comporte sur la paroi externe de la partie fixe $5^a$ de l'enveloppe du canal secondaire un détecteur de position 8 qui signale les déplacements et indique la position du capot mobile 5 b. Selon une disposition connue, plus clairement représentée en détails sur la figure 2, le détecteur de position 8 est placé à l'extrémité d'un arbre 9 d'une longueur suffisante pour couvrir la course de déplacement du capot mobile 5 b qui peut être relativement grande, par exemple de l'ordre de 600 mm dans certaines applications. L'arbre 9 est cylindrique et porte en surface une came 10 de forme générale hélicoïdale et dont le profil est déterminé en fonction des indications ou asservissements éventuels liés à la détection ; l'arbre 9 constitue ainsi une rampe de détection et il est supporté par deux paliers, un palier amont 11 et un palier aval 12, liés l'un et l'autre à la partie fixe $5^a$ de l'enveloppe du canal secondaire. Une bague formant curseur mobile 13 est montée sur la rampe de détection 9 et est solidarisée au capot mobile 5 b. Le palier amont 11 est d'un type connu à rotule sphérique $11^a$ constituant la bague interne qui est fixée à la rampe de détection 9, la bague externe 11 b étant fixée sur la partie amont fixe $5^a$ de l'enveloppe du canal secondaire. Le centre A de la rotule sphérique $11^a$ constitue un point fixe pour la rampe de détection 9.

Le fonctionnement du dispositif d'un genre connu qui vient d'être décrit est le suivant. Le capot mobile 5 b en se déplaçant entraine le curseur mobile 13 qui en suivant la came 10 entraine en rotation la rampe de détection 9 dont les mouvements sont à leur tour transmis au détecteur de position 8 d'un type généralement connu qui transmet un signal électrique traduisant ces mouvements. La réalisation du palier aval 12 du dispositif qui a été décrit en référence aux figures 1 et 2 du dessin doit pour obtenir un fonctionnement satisfaisant et assurer de bonnes qualités de fiabilité remplir certaines conditions particulières. Le palier 12 d'extrémité aval est indispensable car en son absence, en position jet direct de l'inverseur de poussée, lorsque le capot mobile 5 b et donc le curseur 13 qui lui est lié sont en position axiale amont, un porte-à-faux important est obtenu sur la rampe de détection 9, risquant d'entrainer une rupture. L'enveloppe du canal, partie fixe $5^a$ et partie mobile 5 b, est soumise à de fortes sollicitations mécaniques pouvant entrainer des déformations cycliques, liées aux phases de fonctionnement et à l'utilisation de l'inverseur de poussée. Il en résulte pour la rampe de détection 9 à la fois des dilatations longitudinales dans une direction x et des déplacements dans des directions orthogonales y et z qui nécessitent un amortissement.

Un premier mode de réalisation connu, antérieurement appliqué et qui est schématiquement représenté à la figure 3 du dessin joint, a tenté de résoudre le problème posé. Selon ce mode antérieur, la rampe de détection 9 comporte à son extrémité aval un évidement interne cylinrique $9^a$. Cette extrémité aval de la rampe de détection 9 coopère avec un arbre court 14 qui porte une rotule à chaque extrémité, 15 à l'amont, 16 à l'aval et une troisième rotule 17 en position intermédiaire constituant ainsi le palier 12. La rotule amont 15 est montée au moyen d'une bague 18 dans l'évidement 9a de la rampe de détection 9. La rotule aval 16 est montée au moyen d'une bague 19 retenue par un écrou 20 dans un logement 21 ménagé dans un boitier 22 formant support fixe du palier 12 et qui est solidaire de la partie fixe $5^a$ de l'enveloppe du canal secondaire. La rotule intermédiaire 17 disposée au tiers aval de l'arbre 14 est montée dans une bague externe 23 supportée par une plaque plane circulaire 24 disposée entre deux patins 25 et 26 qui sont en appui sur le boîtier-support 22. La bague 23 est susceptible de coulisser axialement dans l'alésage 24a de la plaque 24 et la plaque 24 est elle-même susceptible de coulisser transversalement entre les patins 25 et 26 formant amortisseurs. L'amortissement est renforcé par des rondelles Belleville 27 qui exercent un effort de pression sur l'ensemble plaque et patins en appui sur une face du boîtier-support 22. Le réglage des rondelles 27 est obtenu au moyen d'un écrou de serrage 28 fixé sur le boîtier-support 22. Les débattements de l'extrémité aval de la rampe de détection 9 ainsi que l'amortissement de ces déplacements et les dilatations sont rendus possibles par ce moyen. Ce mode de réalisation connu entraine cependant de nombreux inconvénients. En fonction des déplacements, dûs aux dilatations et aux diverses déformations d'origine mécanique, de la rampe de détection 9, l'arbre 14 subit des déplacements angulaires importants. En outre, ce mode de réalisation limite l'emplacement disponible pour les éléments d'amortissement, plaque 24, patins 25, 26 et rondelles 27 et il en résulte un amortissement souvent insuffisant. Il s'ensuit que des usures prématurées ont été constatées ainsi qu'un déréglage rapide du dispositif d'où il résulte de graves inconvénients de défaut de fiabilité.

L'invention vise à réaliser un ensemble de palier répondant aux conditions précitées sans présenter les inconvénients des dispositifs connus. Elle obtient ces résultats au moyen d'un ensemble de palier caractérisé en ce que la bague lisse est portée par une vis supportée par une première extrémité de chacun de deux bras-supports dont les secondes extrémités sont reliées à un corps de palier solidaire de la partie fixe de l'enveloppe du canal secondaire par des moyens de fixation assurant un pivotement des bras-supports dans un plan perpendiculaire à l'axe commun de la bague lisse et de la vis et un glissement selon le même plan.

Avantageusement, ladite vis est supportée par des manetons cylindriques juxtaposés, respectivement portés par la première extrémité des bras-supports et l'un des manetons traverse un alésage de diamètre supérieur ménagé sur le corps de palier de manière à ce que les débattements de l'extrémité du bras-support sont limités par cet alésage.

Avantageusement, les moyens de fixation comportent, respectivement à chaque seconde extrémité des bras-supports qui sont de forme générale plate, un ensemble vis-écrou coopérant avec un alésage de même diamètre d'une embase du corps de palier et avec une fente dans ledit bras-support de manière à permettre un déplacement relatif guidé entre le bras-support et le corps de palier. Chaque vis traverse également au niveau d'une fente deux plaquettes anti-friction encastrées de part et d'autre du bras-support dans des logements ménagés sur chaque face de la seconde extrémité ainsi qu'une contre-plaque comportant un alésage de passage de la vis de même diamètre.

Avantageusement encore, chaque ensemble vis-écrou porte, respectivement entre la tête de vis et le corps de palier et entre l'écrou et l'ensemble de bras-support, un jeu de rondelles Belleville et les alésages du corps de palier pour le passage respectivement de l'ensemble vis et maneton et des deux ensembles vis-écrou sont disposés de manière que leurs centres forment les sommets d'un triangle.

L'invention ainsi réalisée permet d'obtenir un ensemble de palier qui présente un excellent comportement mécanique répondant à l'application recherchée. En outre la fiabilité est nettement améliorée ainsi que la longévité et la tenue en service de l'ensemble. Les opérations de réglage sont également facilitées et la fréquence des interventions est réduite.

D'autres caractéristiques et avantages apparaitront à la lecture de la description qui va suivre d'un mode de réalisation de l'invention, en référence au dessin annexé sur lequel :

- les figures 1, 2 et 3 déjà examinées correspondent à un mode de réalisation antérieur qui n'a pas donné entière satisfaction ;
- la figure 4 représente une vue en coupe longitudinale partielle d'un ensemble de palier réalisé conformément à l'invention ;
- la figure 5 représente une vue en bout de l'ensemble de palier de la figure 4 ;
- la figure 6 représente une vue en perspective éclatée du corps de palier et d'un bras-support et éléments associés d'un ensemble de palier des figures 4 et 5.

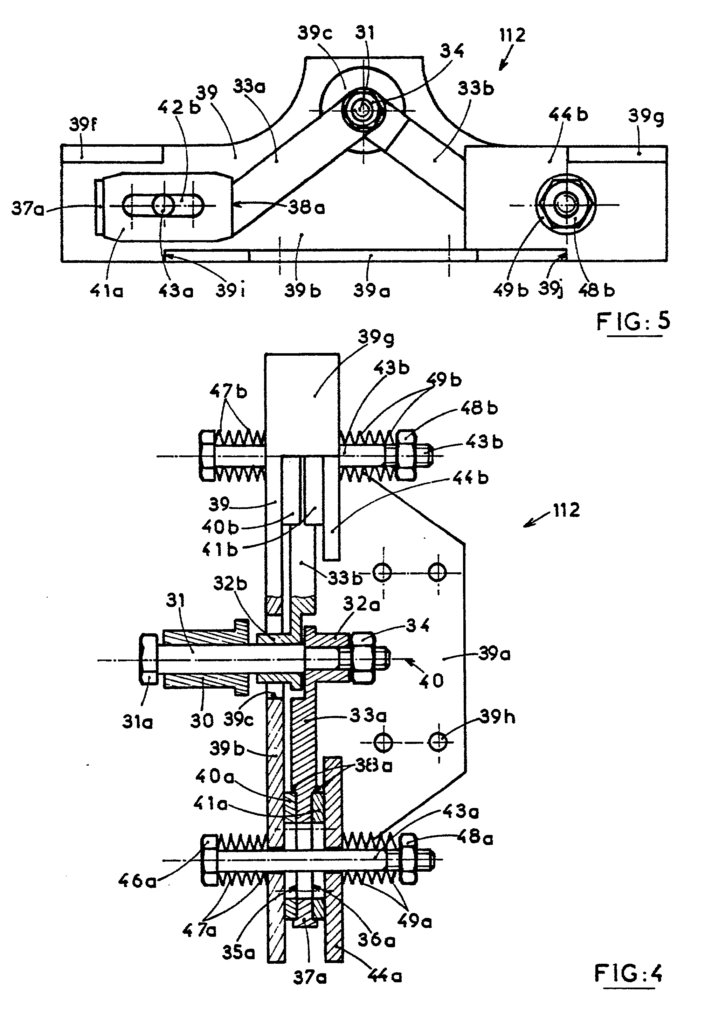

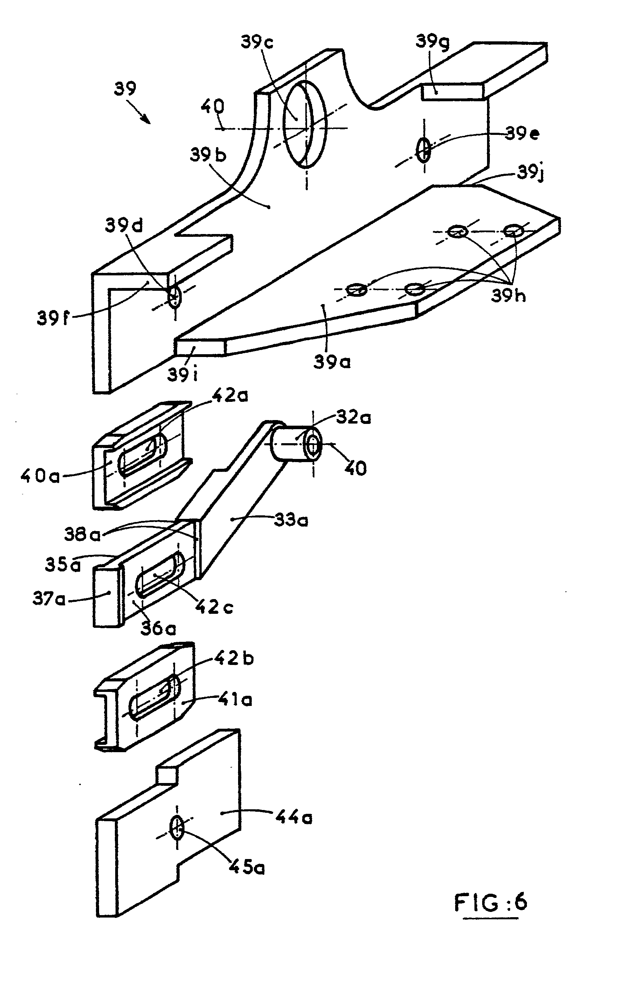

Dans l'application aux rampes de détection de position utilisées sur un inverseur de poussée de flux secondaire d'une turbosoufflante précédemment décrite en référence aux figures 1 et 2, l'invention substitue au palier arrière 12 antérieur représenté sur la figure 3, un ensemble de palier 112 représenté sur les figures 4 et 5. L'extrémité aval de la rampe de détection 9 s'adapte sur une bague lisse 30 portée par une vis 31 qui est supportée par deux manetons cylindriques alésés juxtaposés 32$^a$ et 32 $\underline{b}$ qui forment la première extrémité respectivement de deux bras-supports 33$^a$ et 33 $\underline{b}$. La bague 30 et les manetons 32$^a$ et 32 $\underline{b}$ sont maintenus sur la vis 31 entre la tête 31$^a$ de vis du côté bague et un écrou 34 à l'autre extrémité. Chaque bras-support 33$^a$ et 33 $\underline{b}$ comporte une seconde extrémité de forme générale plate sur chaque face de laquelle est ménagée un logement respectivement 35$^a$ et 36$^a$, entre un rebord d'extrémité 37$^a$ et un rebord interne 38$^a$. Lesdits bras-supports 33$^a$ et 33 $\underline{b}$ sont montés sur un corps de palier 39. Un bras-support 33$^a$, le corps de palier 39 et leurs éléments associés sont également représentés sur la figure 6. Le corps de palier 39 est constitué d'une plaque 39$^a$ parallèle à l'axe commun 40 de la bague 30, de la vis 31 et des manetons 32$^a$ et 32 $\underline{b}$, et d'une embase 39 $\underline{b}$, en équerre par rapport à la plaque 39$^a$. La plaque 39$^a$ sert à la fixation de l'ensemble de palier à la partie fixe de l'enveloppe du canal secondaire de la turbosoufflante et comporte par exemple quatre trous de fixation 39 $\underline{h}$. L'embase 39 $\underline{b}$ comporte en son milieu un alésage 39 $\underline{c}$ et disposés symétriquement de part et d'autre, deux trous 39 $\underline{d}$ et 39 $\underline{e}$, de manière que les centres de l'alésage 39 $\underline{c}$ et des trous 39 $\underline{d}$ et 39 $\underline{e}$ forment les sommets d'un triangle. La vis 31 et le maneton associé 32 $\underline{b}$ traversent l'alésage 39 $\underline{c}$ du corps de palier 39, le diamètre de l'alésage 39 $\underline{c}$ étant supérieur au diamètre externe du maneton 32 $\underline{b}$. Des plaquettes anti-friction 40$^a$ et 41$^a$ sont placées dans les logements 35$^a$ et 36$^a$ ménagés à la seconde extrémité du bras-support 33$^a$. Ces plaquettes 40$^a$ et 41$^a$ ainsi que ladite seconde extrémité du bras-support 33$^a$, comportent respectivement une fente 42$^a$, 42 $\underline{b}$ et 42 $\underline{c}$. La seconde extrémité du bras-support 33$^a$ équipée des plaquettes anti-friction 40$^a$ et 41$^a$ est maintenue en appui sur l'embase 39 $\underline{b}$ du corps de palier 39 au moyen d'une vis 43$^a$ et d'une contre-plaque 44$^a$, ladite vis 43$^a$ traversant le trou 39 $\underline{d}$ du corps de palier 39, les fentes 42$^a$, 42 $\underline{b}$, 42 $\underline{c}$ des plaquettes anti-friction 40$^a$ et 41$^a$ et de la seconde extrémité du bras-support 33$^a$ ainsi qu'un trou 45$^a$ de la contre-plaque 44$^a$. Sur la figure 5, la contre-

plaque 44ᵃ a été enlevée. Entre la tête 46ᵃ de la vis 43ᵃ et l'embase 39 b du corps de palier 39 est placé un premier jeu de rondelles de type Belleville 47ᵃ et entre la contre-plaque 44ᵃ et un écrou 48ᵃ est placé un second jeu de rondelles de type Belleville 49ᵃ. Les plaquettes 40ᵃ et 41ᵃ et la seconde extrémité du bras-support 33ᵃ sont pressées les unes contre les autres entre l'embase 39 b et la contre-plaque 44ᵃ qui est encastrée sous un rebord 39 f de l'embase 39 b du corps de palier 39 et cet ensemble est également en appui sur le bord 39 i de la plaque 39ᵃ. La contre-plaque 44a est ainsi bloquée en rotation et en translation, à l'exception des translations parallèles à l'axe de l'ensemble vis 43ᵃ et écrou 48ᵃ. Le bras-support 33 b est associé avec des éléments identiques correspondants : vis 43 b, écrou 48 b, plaquettes anti-friction 40 b et 41 b, contre-plaque 44 b et jeux de rondelles Belleville de part et d'autre, respectivement 47 b et 49 b ainsi que le rebord 39 g de l'embase 39 b du corps de palier 39 et le bord 39 j de la plaque 39ᵃ.

Dans l'ensemble de palier ainsi réalisé, servant de support à une rampe de détection de position d'un inverseur de poussée de turbosoufflante, les bras-supports 33ᵃ et 33 b ont chacun une liberté de pivotement autour des vis respectives 43ᵃ et 43 b. Ce mouvement de pivotement reste toutefois limité par le passage de la vis 31 et du maneton 32 b dans l'alésage 39 c du corps de palier 39. Un débattement est également autorisé autour des vis 43ᵃ et 43 b par les fentes 42ᵃ, 42 b et 42 c.

Dans une application, le débattement de l'axe 40 de la bague 30 du palier est par exemple limité à l'intérieur d'un cercle de 12 mm de diamètre. L'ensemble vis-écrou 43ᵃ, 48ᵃ et les jeux de rondelles Belleville associées 47ᵃ et 49ᵃ permettent un réglage du serrage du bras-support 33ᵃ et plaquettes associées 40ᵃ et 41ᵃ entre l'embase 39 b et la contre-plaque 44ᵃ et donc un réglage de l'amortissement des mouvements transversaux de la bague 30 portée par la vis 31. Le mode de construction réalisé par l'invention permet de placer un nombre important de rondelles Belleville, par exemple quatre fois onze rondelles 47ᵃ, 49ᵃ, 47 b, 49 b, ce qui améliore la précision du réglage et permet de compenser les répercussions que des usures éventuelles auraient sur l'amortissement.

**Revendications**

1. Ensemble de palier supportant une rampe de détection de position adaptée à un inverseur de poussée du genre monté dans le canal secondaire en vue d'inverser le flux secondaire d'une turbosoufflante, de type palier à bague lisse caractérisé en ce que ladite bague lisse (30) est portée par une vis (31) supportée par une première extrémité de chacun de deux bras-supports (33a, 33b) dont les secondes extrémités respectives sont reliées à un corps de palier (39) solidaire de la partie fixe de l'enveloppe du canal secondaire par des moyens de fixation (43a, 48a, 47a, 49a; 43b, 48b, 47b, 49b) assurant un pivotement et un glissement dans des bras-supports un plan perpendiculaire à l'axe commun de la bague lisse (30) et de la vis (31).

2. Ensemble de palier selon la revendication 1 caractérisé en ce que lesdits moyens de fixation comportent respectivement à chaque seconde extrémité des bras-supports (33a, 33b) un ensemble vis-écrou (43a, 48a; 43b, 48b) coopérant avec un alésage (39d, 39e) de même diamètre d'une embase (39b) du corps de palier (39) et avec une fente (42c) dans ledit bras-support (33a, 33b) de manière à permettre un déplacement relatif guidé entre le bras-support (33a, 33b) et le corps de palier (39) fixe.

3. Ensemble de palier selon la revendication 2 caractérisé en ce que ladite vis (31) est supportée par deux manetons (32a, 32b) cylindriques juxtaposés, chacun formant respectivement ladite première extrémité de chacun des bras-supports (33a, 33b).

4. Ensemble de palier selon l'une des revendications 2 ou 3, caractérisé en ce que chaque bras-support (33a, 33b) a une forme générale plate et en ce qu'une contre-plaque (44a, 44b) comportant un alésage (45a) de passage de la vis (43a, 43b) de même diamètre est associée à chaque seconde extrémité de bras-support (33a, 33b) du côté opposé au corps de palier (39), ladite contre-plaque (44a, 44b) étant découpée latéralement pour venir en appui sur un bord (39i, 39j) du corps de palier (39) et en encastrement sous un rebord (39f, 39g) dudit corps de palier (39) de telle sorte que lesdites contre-plaques (44a, 44b) sont bloquées en rotation et en translation à l'exception du seul degré de liberté autorisé, en translation parallèle à l'axe de chaque ensemble vis-écrou (43a, 43b).

5. Ensemble de palier selon la revendication 4 caractérisé en ce que chaque face de la seconde extrémité de chacun des bras-supports (33a, 33b) comporte un logement dont les deux extrémités sont délimitées par un rebord (37a, 38a) et en ce que deux plaquettes (40a, 41a) anti-friction comportant respectivement chacune une fente (42a, 42b) de passage de vis (43a, 43b) au droit de la fente (42c) de chacun des bras-supports (33a, 33b) sont placées dans lesdits logements, lesdites plaquettes (40a, 41a) et ladite extrémité étant pressées les unes contre les autres entre l'embase (39b) du corps de palier (39) et ladite contre-plaque (44a, 44b).

6. Ensemble de palier selon l'une des revendications 4 ou 5 caractérisé en ce que ledit ensemble vis-écrou (43a, 48a; 43b, 48b) porte, respectivement entre la tête (46a) de vis et le corps de palier (39) et entre l'écrou (48a) et la contre-plaque (44a, 44b), un jeu de rondelles Belleville (47a, 49a; 47b, 49b).

7. Ensemble de palier selon la revendication 3 et l'une quelconque des revendications 1, 2, 4, 5 et 6 caractérisé en ce que l'un (32b) des deux manetons traverse un alésage (39c) de diamètre supérieur ménagé sur le corps de palier (39) de manière à ce que les débattements de l'extrémité du bras-support (33b) sont limités par cet alésage (39c).

8. Ensemble de palier selon les revendications 2 et 3 et l'une quelconque des revendications 2 et 3 et l'une quelconque des revendications 4 à 7 caractérisé en ce que les axes géométriques théoriques de l'ensemble vis (31) et manetons (32, 32b) et de chaque ensemble vis-écrou (43a–48a, 43b–48b) sont disposés aux sommets d'un triangle isocèle fictif tracé sur l'embase (39b) du corps de palier (39).

## Patentansprüche

1. Lagereinheit mit Gleitring zur Lagerung einer Stellungsgeberrampe für einen Schubumkehrer, der zur Umkehrung des Sekundärstroms im Sekundärkanal eines Turbogebläses montiert ist, dadurch gekennzeichnet, daß der Gleitring (30) von einem Schraubenbolzen (31) getragen ist, der an dem ersten Ende eines jeden von zwei Tragarmen (33a, 33b) gehalten ist, deren zweite Enden jeweils mit einem Lagerkörper (39) verbunden sind, der mit Hilfe von Befestigungsmitteln (43a, 48a, 47a, 49a; 43b, 48b, 47b, 49b) mit dem feststehenden Teil des Mantels des Sekundärkanals fest verbunden ist, wobei diese Befestigungsmittel ein Schwenken und ein Gleiten der Tragarme in einer senkrecht zur gemeinsamen Achse des Gleitrings (30) und des Schraubenbolzens (31) verlaufenden Ebene ermöglichen.

2. Lagereinheit nach Anspruch 1, dadurch gekennzeichnet, daß die an jedem der zweiten Enden der Tragarme (33a, 33b) vorgesehenen Befestigungsmittel einen Schrauben-Muttern-Satz (43a, 48a; 43b, 48b) umfassen, der mit einer in einer Fußplatte (39b) des Lagerkörpers (39) angebrachten durchmessergleichen Bohrung (39d, 39e) und einem Langloch (42c) in dem Tragarm (33a, 33b) so zusammenwirken, daß sie eine geführte Relaltivbewegung zwischen dem betreffenden Tragarm (33a, 33b) und dem festen Lagerkörper (39) ermöglichen.

3. Lagereinheit nach Anspruch 2, dadurch gekennzeichnet, daß der Schraubenbolzen (31) in zwei nebeneinanderliegenden zylindrischen Zapfen (32a, 32b) gehalten ist, wobei jeder dieser Zapfen das erste Ende jeweils eines der Tragarme (33a, 33b) bildet.

4. Lagereinheit nach einem der Ansprüche 2 oder 3, dadurch gekennzeichnet, daß jeder der Tragarme (33a, 33b) eine insgesamt flache Form hat, daß dem zweiten Ende jedes Tragarms (33a; 33b) auf der dem Lagerkörper (39) entgegengesetzten Seite eine Gegenplatte (44a, 44b) zugeordnet ist, die eine durchmessergleiche Bohrung (45a) für den Durchtritt der Schraube (43a, 43b) des betreffenden Schrauben-Muttern-Satzes besitzt, und daß diese Gegenplatte (44a, 44b) seitlich so ausgeschnitten ist, daß sie sich an einem Rand (39i, 39j) des Lagerkörpers (39) abstützt und unter einer Randleiste (39f, 39g) des Lagerkörpers (39) so gefaßt ist, daß sie mit Ausnahme eines einzigen zulässigen Freiheitsgrads der Verschiebung parallel zur Achse des zugehörigen Schrauben-Muttern-Satzes (43a, 43b) gegen Drehen und Verschieben blockiert ist.

5. Lagereinheit nach Anspruch 4, dadurch gekennzeichnet, daß auf jeder Seite des zweiten Endes jedes Tragarms (33a, 33b) jeweils eine Aufnahme vorgesehen ist, deren beide Endbereiche durch je einen Anschlag (37a, 38a) begrenzt sind, daß in diesen Aufnahmen zwei reibungsarme Platten (40a, 41a) angeordnet sind, die an der Stelle des Langlochs (42c) jedes Tragarms (33a, 33b) ein Langloch (42a, 42b) für den Durchtritt der Schraube (43a, 43b) des betreffenden Schrauben-Muttern-Satzes haben, und daß diese Platten (40a, 41a) und das betreffende Ende des Tragarms zwischen der Fußplatte (39b) des Lagerkörpers (39) und der genannten Gegenplatte (44a, 44b) gegeneinander verspannt werden.

6. Lagereinheit nach einem der Ansprüche 4 oder 5, dadurch gekennzeichnet, daß der Schrauben-Muttern-Satz (43a, 48a; 43b, 48b) zwischen dem Schraubenkopf (46a) und dem Lagerkörper (39) bzw. zwischen der Mutter (48a) und der Gegenplatte (44a, 44b) jeweils einen Satz Belleville-Federn (47a, 49a; 47b, 49b) trägt.

7. Lagereinheit nach Anspruch 3 und einem der Ansprüche 1, 2, 4, 5 und 6, dadurch gekennzeichnet, daß einer (32b) der beiden Zapfen durch eine an dem Lagerkörper (39) angebrachte durchmessergrößere Bohrung (39c) hindurchtritt, so daß die Bewegungen des Endes des Tragarms (33b) durch diese Bohrung (39c) begrenzt sind.

8. Lagereinheit nach Anspruch 2 und 3 und einem der Ansprüche 4 bis 7, dadurch gekennzeichnet, daß die theoretischen geometrischen Achsen der aus dem Schraubenbolzen (31) und den Zapfen (32a, 32b) bestehenden Einheit und der beiden Schrauben-Muttern-Sätze (43a–48a, 43b–48b) in den Eckpunkten eines auf der Fußplatte (39b) des Lagerkörpers (39) gezogenen fiktiven gleichschenkligen Dreiecks liegen.

## Claims

1. Bearing assembly supporting a position sensing ramp suited to a thrust reverser of the type fitted to the secondary duct with a view to reversing the secondary flow of air of a turbofan engine, of the smooth ring type characterised in that the said smooth ring (30) is carried on a screw (31) supported on the first end of each of the supporting arms (33a, 33b) of which is firmly attached to the fixed part of the cowling of the secondary duct by means of the fastenings (43a, 48a, 47a, 49a; 43b, 48b, 47b, 49b), ensuring that the supporting arms can pivot and also allowing them to slide in a plane perpendicular to the common axis of the smooth ring (30) and the screw (31).

2. Bearing assembly in accordance with Claim 1 characterised in that the said means of fixing comprise respectively a second end of the supporting arms (33a, 33b), a screw/nut assembly (43a, 48a; 43b, 48b) working in conjunction with a hole (39d, 39e) of the same diameter as a base (39b) in the bearing mounting (39) and with a slot (42c) in the said supporting arm (33a, 33b) in such a way as to allow relative guided movement between the supporting arm (33a, 33b) and the fixed bearing mounting (39).

3. Bearing assembly in accordance with Claim 2 characterised in that the said screw (31) is supported by two juxtaposed cylindrical bushed wrist pins (32a, 32b), each forming respectively the said first end of each of the supporting arms (33a, 33b).

4. Bearing assembly in accordance with either of Claims 2 or 3 characterised in that each supporting arm (33a, 33b) has a shape which is generally flat and in that a backplate (44a, 44b) with a hole (45a) for the passage of the screw (43a, 43b) of the same diameter is associated with a second end of the supporting arm (33a, 33b) on the side opposite the bearing mounting (39), the said backplate (44a, 44b) being cut laterally to bring it into contact with an edge (39i, 39j) of the bearing mounting (39) and a recess under a shoulder (39f, 39g) of the said bearing mounting in such a way that the said backplates (44a, 44b) are prevented from rotating and from other movement with the exception of the only direction of movement permitted, parallel to the axis of each screw/nut assembly (43a, 43b).

5. Bearing assembly in accordance with Claim 4 characterised in each side of the second end of each of the supporting arms (33a, 33b) comprises a recess whose two ends are defined by an edge (37a, 38a) and in that two low-friction plates (40a, 41a) each comprising respectively a slot (42a, 42b) for the passage of a screw (43a, 43b) in the area of the slot (42c) in each of the supporting arms (33a, 33b) are housed in each of the said recesses, the said plates (40a, 41a) and the said end being pressed against each other between the base (39b) of the bearing mounting (39) and the said backplate (44a, 44b).

6. Bearing assembly in accordance with either of the Claims 4 or 5 characterised in that the said screw/nut assembly (43a, 48a; 43b, 49b) carries, respectively between the head (46a) of the screw and the bearing mounting (39) and between the nut (48a) and the backplate (44a, 44b), a set of Belleville washers (47a, 49a; 47b, 49b).

7. Bearing assembly in accordance with Claim 3 and any of the Claims 1, 2, 4, 5 and 6 characterised in that one (32b) of the two bushed wrist pins passes through a hole (39c) of greater diameter bored in the bearing mounting (39) so that the to and fro movement of the end of the supporting arm (33b) is restricted by this hole (39c).

8. Bearing assembly in accordance with Claims 2 and 3 and any of the Claims 4 to 7 characterised in that the theoretical geometrical axes of the screw assembly (31) and the bushed wrist pins (32a, 32b) and of each screw/nut assembly (43a–48a, 43b–48b) are placed at the apexes of a notional isosceles triangle traced on the base (39b) of the bearing mounting (39).

FIG:1

FIG:2

FIG:3

FIG:5

FIG:4

FIG : 6